# EUROPEAN PATENT SPECIFICATION

(11) **EP 2 633 639 B1**
(45) Date of publication and mention of the grant of the patent: **09.11.2016**
(21) Application number: 11781603.3
(22) Date of filing: 22.09.2011
(51) Int. Cl.: H04L 9/06

(54) **EFFICIENT DELIVERY OF STRUCTURED DATA ITEMS**
EFFIZIENTE LIEFERUNG VON STRUKTURIERTEN DATENELEMENTEN
DISTRIBUTION EFFICACE D'ÉLÉMENTS DE DONNÉES STRUCTURÉS

(30) Priority: 26.10.2010 GB 201018048
(43) Date of publication of application: 04.09.2013
(73) Proprietor: NDS Limited, Staines, Middlesex TW18 4EX (GB)
(72) Inventor: MANTIN, Itsik, 60850 Shoham (IL); NINIO, Matan, 69051 Tel Aviv (IL)
(74) Representative: Hoarton, Lloyd Douglas Charles
(86) International application number: PCT/IB2011/054172
(87) International publication number: WO 2012/056338

(56) References cited:
- US-A- 5 778 069
- US-A1- 2004 111 613
- US-A1- 2007 230 694

## Description

### BACKGROUND OF THE INVENTION

A method for determining whether there exist linear estimations for look-up tables using the Walsh Transform is described at www.ciphersbyritter.com /ARTS/MEASNONL. HTM.

The following patents and patent applications are believed to reflect the state of the art:
US 5,282,249 to Cohen, et al;
US 5,481,609 to Cohen, et al;
WO 02/06979 of NDS Ltd;
US 2004/0111613 to Shen-Orr, et al; and
US 2007/0230694 of Qualcomm Inc.

### SUMMARY OF THE INVENTION

The present invention, in certain embodiments thereof, seeks to provide improved methods and a server for sending cryptographic data items to client devices according to independent claims 1 and 8 to 10.

According to one aspect of the present invention, there is provided a configurable client device as defined in claim 1 hereinafter.

According to another aspect of the present invention, there is provided a server as defined in claim 12 hereinafter.

According to a further aspect of the present invention, there is provided a method as defined in claim 13 or claim 14 hereinafter.

### BRIEF DESCRIPTION OF THE DRAWINGS

The present invention will be understood and appreciated more fully from the following detailed description, taken in conjunction with the drawings in which:
Fig. 1 is a simplified block diagram illustration of a system for efficient delivery of structured data items constructed and operative in accordance with an embodiment of the present invention;
Fig. 2 is a simplified block diagram illustration of the tester-builder architecture of the system of Fig. 1;
Fig. 3 is a simplified block diagram illustration of the system of Fig. 1 in an embodiment where only one CDIP is produced; and
Fig. 4 is a simplified flowchart diagram of preferred methods of operation of the system of Fig. 1.

### DETAILED DESCRIPTION OF AN EMBODIMENT

In many DRM systems a family of cryptographic algorithms is used to protect the digital content. However, delivery of cryptographic algorithms and data items which are used by the cryptographic algorithms from the DRM server to a DRM client may entail significant network usage and require significant storage in the DRM client when these data items need to be used again. The need for significant network usage and significant storage requirements in the DRM client may be especially acute when dealing with dynamic cryptographic systems (i.e., "moving targets"), where the cryptographic algorithms are changed dynamically and from a distance, the transmission of various large tables to all devices is required. To complicate matters, at least some of these tables may be required to comply with cryptographic properties that may make them hard to compress using conventional data compression methods. To further complicate matters, different devices may need to receive different tables.

For example a DRM server may need to send eight client-specific matrices of 2048*2048 bits to each of one million clients, requiring network usage of approximately four terabytes.

The cryptographic data structures, e.g., matrices, are denoted in the present specification and claims as "crypto products".

Crypto products can be sometimes divided into smaller data items which are denoted in the present specification and claims as "crypto data item parts" (CDIPs). This division is useful when the crypto product is used in the server or in the client one CDIP at a time. For example, matrices that are multiplied by a vector can be naturally divided into either rows or columns, depending on whether the multiplication is from the left or from the right.

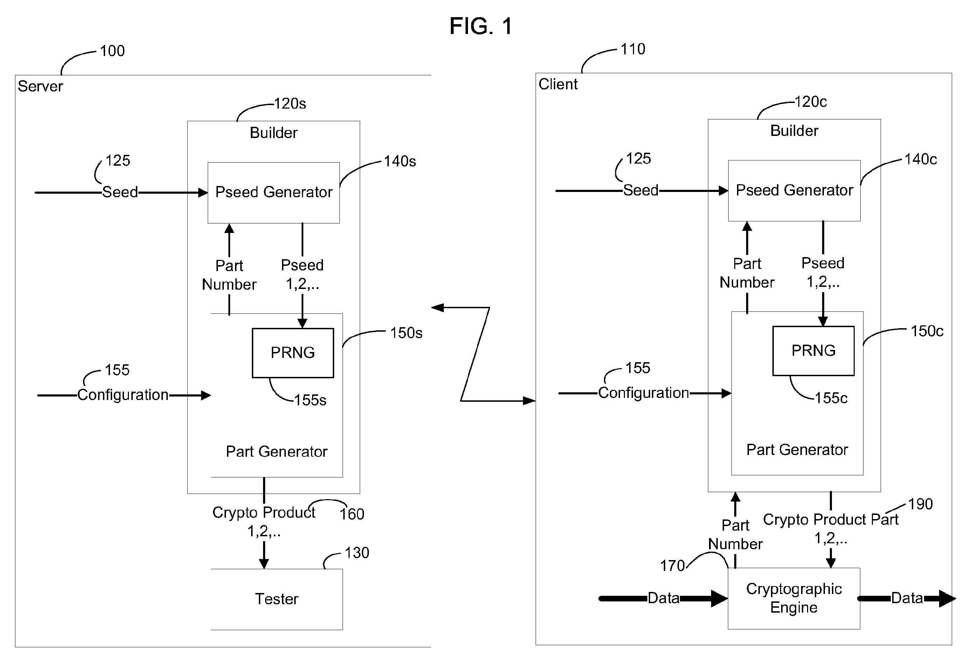

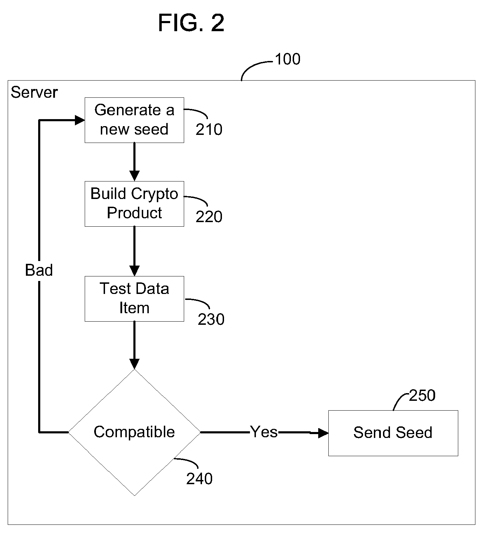

Reference is now made to Fig. 1, which is a simplified block diagram illustration of a system for efficient delivery of structured data items constructed and operative in accordance with an embodiment of the present invention. Reference is additionally made to Figs 2. Fig. 2 is a simplified block diagram illustration of the tester-builder architecture of the system of Fig. 1.

The system of Fig. 1 comprises a server 100 and a client 110. The server 100 comprises a server-side builder 120s and a tester 130. The client 110 comprises a client-side builder 120c.

The client 110 may be a consumer device, such as, but not limited to, a cell-phone, an e-reader, a music-playing or video-displaying device, or other appropriate device. In addition to the components of the client 110 discussed herein, the client 110 also comprises a processor (not depicted) and other appropriate hardware and software, as is known in the art.

The server 100 may be any one of a number of servers, including, but not limited to various multi-media servers, such as a streaming music server or an on-line book service or a cable television network. The server 100 typically implements some sort of a DRM or other licensing regime (such as a conditional access system) over content consumed at the client 110. For the purposes of the system of Fig. 1, the server 100 comprises computational resources which are significantly greater than those of the client 110.

The builder 120s, 120c comprise a Pseed (part seed) generator 140s, 140c and a part generator 150s, 150c. The pseed generator 140s, 140c receives a seed 125 from which a particular CDIP can be generated. The seed 125 comes from an application that uses the builder 120s, 120c, which, for the server side builder 120s, comprises the tester 130, and, for the client side builder 120c, comprises a cryptographic engine 170 (which is described below in greater detail). A typical Pseed generator 140s, 140c comprises a cryptographic hash function (one non-limiting example of which would be the well known SHA-256 hash function) which receives the seed and part number (a serial counter; for example, the first part is part number one, the second part is part number two, and so forth), hashes the received inputs, and outputs the Pseed. The output Pseed is input into the part generator 150s, 150c.

The part generator 150s, 150c operates to generate a CDIP from the input Pseed. The part generator 150s, 150c typically comprises a pseudo-random number generator (PRNG) 155s, 155c. PRNGs are well known in the art, and any appropriate PRNG, such as, but not limited to the well known RC4 PRNG that is the base of the RC4 stream cipher, The output of the PRNG is a large number of pseudo-random bits that is sufficient for generation of the CDIP, for example and without limiting the generality of the foregoing, 100 pseudo-random bits can be used to generate a row of a 100x100 matrix by simply filling the row with the bits. Since both the server-side part generator 150s and the client-side part generator 150c comprise the same PRNG 155s, 155c when the server-side part generator 150s and the client-side part generator 150c are inputted with an identical pseed, then both the server-side part generator 150s and the client-side part generator 150c will output the same output (i.e. the same CDIP).

The part generator 150s, 150c, is operative to generate CDIPs (as noted above, crypto data item parts) of the crypto products as explained above. In addition, the part generator 150s, 150c may also receive a part number, such as a row number or a column number in the case of a matrix crypto product. In addition, the part generator 150s, 150c may also receive configuration data which comprises parameters for generation of the CDIPs, for example and without limiting the generality of the foregoing, a target portion of ones in the matrix-row or the matrix-column. From these inputs into the part generator 150s, 150c, a CDIP is generated. For example and without limiting the generality of the foregoing, a matrix-row or a matrix-column with a portion of ones that is within a specific range. Those skilled in the art will appreciate that different cryptographic schemes have different requirements for different data items, for example and without limiting the generality of the foregoing, a matrix, a number, a vector, a table of permutations, or a look-up table (herein denoted as crypto products). For instance, one cryptographic scheme may require a binary matrix populated with 40% ones and 60% zeros, and a second cryptographic scheme may require a binary matrix populated with exactly 50% zeros and 50% ones. Alternatively, a block cipher which employs a look-up table (s-box) typically requires that the look-up table have no linear estimations (i.e. no linear function should be similar to the look-up table). Such a requirement can be evaluated using the Walsh Transform, as explained at www.ciphersbyritter.com/ARTS/ MEASNONL.HTM. Thus the part generator 150s, 150c comprises a mathematical function which takes the input pseudo-random numbers and outputs the zeros and ones in the desired proportion. Those skilled in the art will appreciate that there are many well known ways to generate crypto products such as matrices from a sufficient amount of pseudo-random bits in any desired proportion. The part generator 150s, 150c may also receive an input configuration 155 which, inter-alia dictates the proportion of zero and ones in the CDIP outputted by the part generator 150s, 150c. The input configuration 155 may also define which CDIP type is to be generated when the system is operative to generate different CDIPs for different crypto products.

The CDIP, depicted in Fig. 1 as Crypto Product 1,2, ... 160 which is output by the server-side part generator 150s is input into the tester 130. The tester 130 aggregates the CDIP into a desired crypto product and then tests the crypto product. The tester 130 is programmed to verify that the crypto product under test has desired properties, for example good cryptographic properties. Those skilled in the art will appreciate that good cryptographic properties for linear items (e.g. matrices) comprise, inter-alia, a dependency of each of the output bits on a large portion of the input bits (the so-called avalanche property). That is to say, a matrix under test is said to have bad cryptographic properties if, when, during the test, an input is changed slightly (for example, flipping a single bit) the output does not change significantly (e.g., half the output bits flip). S-boxes (i.e. lookup tables) generated by the part generator 150s are said to have good cryptographic properties if the s-boxes are compliant with the avalanche property and the transformations represented by the s-boxes are properly distant from linear transformations. The discussion above of testing s-boxes using the Walsh Transform is relevant as well for determining the cryptographic properties of the s-boxes. P-boxes generated by the part generator 150s are said to have good cryptographic properties if the p-boxes result in cryptographically acceptable levels of spreading of bits.

Tests and test modules for various cryptographic modules (e.g. matrices, s-boxes and p-boxes) are well known to those skilled in the art, and are implementable utilizing the computation power available at the server, as discussed above.

In case the crypto product does not comply with the desired properties, the builder can be inputted with a new input seed 125, and if the resultant crypto product also does not comply with the desired properties, a third seed 125 can be generated and so on until a proper crypto product that has the desired properties and passes the required tests is found, as is described below with reference to Fig. 2.

Once a crypto product is found which passes the tests of the tester 130, the seed 125 that was used to generate can then be transmitted to the client 110 as a compressed version of the crypto product, allowing the recovery of the crypto product in the client side builder. The transmission of the seed 125 can be performed using encrypted and/or authenticable communications.

Referring specifically to Fig. 2, the flow of data in the server is as follows. A new seed 125 is generated 210. The seed 125 may be a produced by a counter, and comprise a next, sequential number taken from the counter. Alternatively, the seed 125 may be taken from the least significant bits of the time on a server clock. Alternatively, the seed 125 may be generated by a true RNG or pseudo RNG.

The seed 125 generated in step 210 is utilized, as described with reference to Fig. 1, to generate/build the desired crypto product 160 (step 220). The built/generated crypto product 160 is input to the tester 130 for testing 230. The tester 130 tests to determine if the built crypto product 160 is compatible for use in the client 240, as described above. If the crypto product 160 is determined to be compatible for use in the client in step 240, then the seed 125 is sent to the client 110 (step 250). The client device 110, receives the seed. However, if the crypto product 160 is determined to not be compatible for use in the client in step 240, then a new seed 125 is generated again, and the system returns to step 210.

Returning now to the description of Fig. 1, the client device 110 comprises a builder 120c which is, by design, identical to the builder comprised at the server 100. Thus, when the client-side builder 120c and the server side builder 120s are input an identical part seed, both the client-side builder 120c and the server side builder 120s will output a crypto product part 190 corresponding to the CDIP 160 for the each different part number and consequently will generate the same crypto product. The client-side part generator 150c also receives an identical input configuration 155 to that received by the server-side part generator 150s. The crypto product part 190 is integrated, by a cryptosystem integrator (not depicted), into a cryptographic engine 170, either at once as the entire crypto product or one CDIP at a time. The cryptographic engine 170 comprises a cryptographic algorithm that needs the crypto product as its auxiliary input. For example and without limiting the generality of the foregoing, most of the block ciphers (e.g., AES, DES) need s-box crypto products as part of their processing.

In addition, if it is determined as a result of the testing that a data item is suitable for use in the client 110 beginning after a certain number of bits resulting from the seed 125 (that is to say, an offset), then the offset can also be sent, along with the seed 125 from the server 100 to the client 110. The client 110 can then build the data item by generating the certain number of bits (i.e. the offset), and not storing those bits. Afterwards, the next bits are used to populate the desired data item.

It is additionally appreciated that if a certain row or column of a matrix is determined to have the desired properties for the data item, then the row number or column number can be sent from the server 100 to the client 110 as the offset.

It is appreciated that the description of the builder 120s, 120c hereinabove is one of many possible designs and embodiments. Alternatively the builder might comprise a bitstream generator (such as a PRNG) which outputs a bitstream into a part generator. The part generator would generate zeros and ones as needed in order to build the desired crypto product or data item.

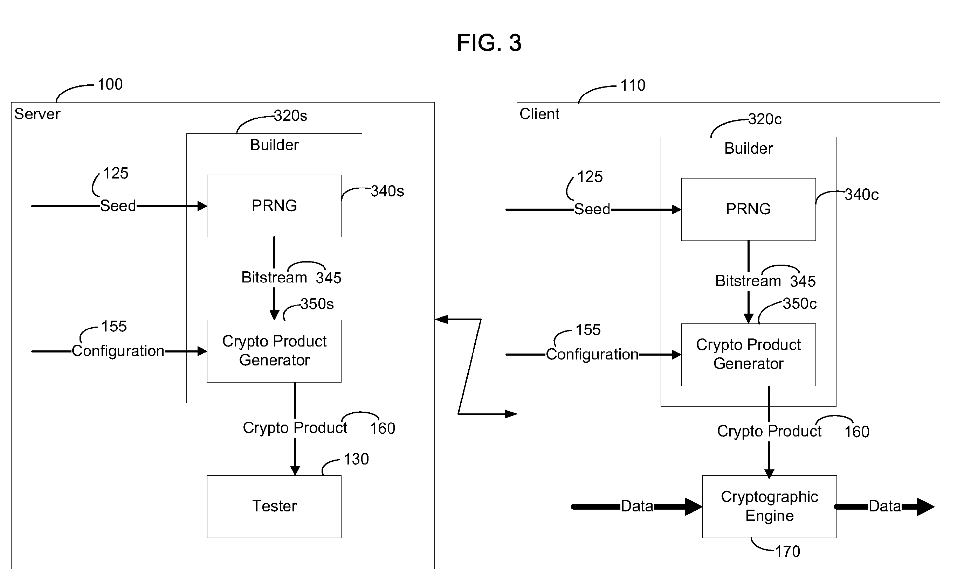

Reference is now made to Fig. 3 is a simplified block diagram illustration of the system of Fig. 1 in an embodiment where only a single CDIP is produced. The case where only one CDIP is produced is a special case, dealt with herein below. The server-side builder 320s receives the seed 125, as noted above. The seed 125 is input directly into a server-side PRNG 340s. The server-side PRNG 340s outputs, according to the seed 125, a bitstream 345, which is input into a server-side crypto product generator 350s. The crypto product generator 350s operates as does the part generator 150s described above. The crypto product 160 generated by the crypto product generator 350s is input into the tester 130. When a crypto product 160 is generator which is deemed acceptable by the tester 130, then, as above, the seed 125 and the configuration 155 are transmitted to the client 110.

At the client device, the seed 125 is input to a client side PRNG 340c. The client side PRNG 340c outputs, according to the seed 125, a bitstream 345, which is input into a client-side crypto product generator 350c. The crypto product generator 350c operates as does the part generator 150c described above. The crypto product 160 generated by the crypto product generator 350c is input into the cryptographic engine 170. The crypto product is integrated, by a cryptosystem integrator (not depicted), into the cryptographic engine 170.

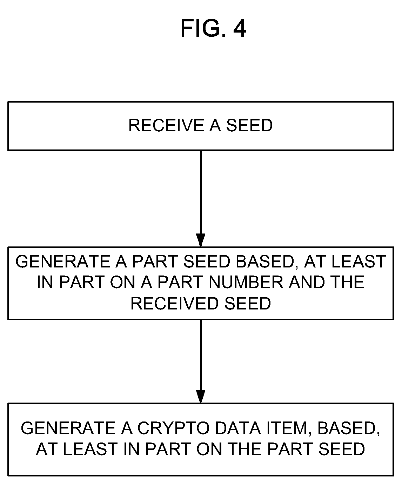

Reference is now made to Fig. 4, which is a simplified flowchart diagram of preferred methods of operation of the system of Fig. 1. The method of Fig. 4 is believed to be self explanatory in light of the above discussion.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product; on a tangible medium; or as a signal interpretable by an appropriate computer.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined by the appended claims and equivalents thereof:

## Claims

1. A configurable client device (110) for consuming digital content, said device (110) comprising:
a block cipher;
a seed receiver operative to receive a seed (125);
a part seed generator (140c) comprising a cryptographic hash function operative to receive:
a part number; and
the seed (125) from the seed receiver, and to generate a part seed, as a result of the cryptographic hash function, the part seed based, at least in part, on the seed (125) and the part number;
a part generator (150c) comprising a pseudo-random number generator (155c) operative to receive the part seed produced by the part seed generator (140c) to produce a crypto data item part using the output of the pseudo-random number generator (155c), the crypto data item part based, at least in part, on the part seed; and
a cryptosystem integrator operative to integrate the produced crypto data item part (190) into the block cipher, thereby producing a crypto product
wherein the block cipher is operative to use the produced crypto product as an auxiliary input into a cryptographic algorithm used to protect said digital content.

2. The device according to claim 1 and wherein the part number comprises the counter value of a serial counter.

3. The device according to either claim 1 or claim 2 and wherein the part generator (150c) is operative to receive a crypto data item type, and the crypto data item part produced is based, at least in part, on both the part seed and the crypto data item type.

4. The device according to any of claims 1 - 3 and further comprising the part seed generator (140c) for receiving a configuration definition comprising:
a crypto data item type definition; and
crypto data item generation parameters.

5. The device according to any of claims 1 - 4 and also comprising:
the cryptosystem integrator being further operative to receive the crypto product (160) and to integrate the crypto product (160) into an existing cryptosystem, thereby producing a new cryptosystem.

6. The device according to claim 4 and wherein the configuration definition (155) includes an offset, and a crypto data item generator operative to produce the crypto product (160) based, at least in part, on a portion of the part seed indicated by the offset.

7. The device according to any of claims 1 - 6 and wherein the crypto product (160) comprises one of a look-up table; a matrix; and a permutation table.

8. A server (100) comprising:
a seed generator operative to generate a seed (125);
a part seed generator (140s) comprising a cryptographic hash function, operative to receive:
a part number; and
the seed (125) from a seed receiver and to produce a part seed, as a result of the cryptographic hash function, the part seed based, at least in part, on the seed (125) and the part number;
a part generator (150s) comprising a pseudo-random number generator (155s) operative to receive the part seed produced by the part seed generator (140s) to produce a crypto data item part using the output of the pseudo-random number generator (155s), the crypto data item part based, at least in part, on a bitstream;
a tester (130) operative to generate a crypto product (160) from a plurality received crypto data item parts and to test the produced crypto product (160) and verify that the produced crypto product (160) has desired cryptographic properties, wherein the produced crypto product (160) is used to implement a licensing regime over content consumed at a configurable device (110); and
a transmitter operative, in response to a positive result of the verifying, to send the seed to the configurable device (110).

9. A method comprising:
receiving a seed (125) from a server (100);
generating a part seed using a result of a cryptographic hash function, the part seed based, at least in part, on:
a part number; and
the received seed (125);
generating a crypto data item part (190) using the output of a pseudo-random number generator (155c), the crypto data item part based, at least in part, on the part seed; and
integrating the generated crypto data item part (190) into a block cipher, thereby producing a crypto product,
wherein the block cipher uses the generated crypto product as an auxiliary input into a cryptographic algorithm used to protect digital content.

10. A method comprising:
generating a seed (125);
generating a part seed using a result of a cryptographic hash function, the part seed based, at least in part, on the seed (125) and a part number;
generating a crypto data item part using the output of a pseudo-random number generator (155s), the crypto data item part based, at least in part, on the part seed;
generating a crypto product (160) from a plurality received crypto data item parts;
testing the generated crypto product (160) and verifying that the generated crypto product has desired cryptographic properties, wherein the generated crypto product (160) is used to implement a licensing regime over content consumed at a configurable device (140); and
transmitting the seed (125) to the configurable device (110) in response to a positive result of the verifying.

## Patentansprüche

1. Konfigurierbares Client-Gerät (110) zur Nutzung von digitalem Inhalt, wobei besagtes Gerät (110) Folgendes umfasst:
einen Blockcode;
einen Seed-Empfänger, der dazu dient, eine Seed (125) zu empfangen;
einen Teilseed-Generator (140c) umfassend eine kryptographische Hash-Funktion zum Empfangen:
einer Teilnummer; und
der Seed (125) aus dem Seed-Empfänger, und zum Generieren einer Teilseed, als Ergebnis der kryptographischen Hash-Funktion, wobei die Teilseed, mindestens teilweise, auf der Seed (125) und der Teilnummer basiert;
einen Teilgenerator (150c) umfassend einen Pseudo-Zufallszahlengenerator (155c), der dazu dient, die vom Teilseed-Generator (140c) erzeugte Teilseed zu empfangen, um ein Krypto-Datenelementteil mithilfe des Outputs des Pseudo-Zufallszahlengenerators (155c) zu erzeugen, wobei das Krypto-Datenelementteil, mindestens teilweise, auf der Teilseed basiert; und
einen Krypto-Systemintegrator, der dazu dient, das erzeugte Krypto-Datenelementteil (190) in den Blockcode zu integrieren, wodurch ein Kryptoprodukt erzeugt wird,
worin der Blockcode dazu dient, das erzeugte Kryptoprodukt als einen Hilfsinput in einen kryptographischen Algorithmus, der zum Schutz des besagten digitalen Inhalts benutzt wird, zu benutzen.

2. Gerät nach Anspruch 1 und worin die Teilnummer den Zählerwert eines seriellen Zählers umfasst.

3. Gerät entweder nach Anspruch 1 oder Anspruch 2 und worin der Teilgenerator (150c) dazu dient, einen Krypto-Datenelementtyp zu empfangen, und das erzeugte Krypto-Datenelementteil, mindestens teilweise, sowohl auf der Teilseed als auch dem Krypto-Datenelementtyp basiert.

4. Gerät nach irgendeinem der Ansprüche 1-3 und ferner umfassend den Teilseed-Generator (140c) zum Empfangen einer Konfigurationsdefinition, umfassend:
eine Krypto-Datenelementtyp-Definition; und
Krypto-Datenelement-Generierungsparameter.

5. Gerät nach irgendeinem der Ansprüche 1-4 und außerdem umfassend:
den Krypto-Systemintegrator, der ferner dazu dient, das Kryptoprodukt (160) zu empfangen und das Kryptoprodukt (160) in ein bestehendes Kryptosystem zu integrieren, wodurch ein neues Kryptosystem erzeugt wird.

6. Gerät nach Anspruch 4 und worin die Konfigurationsdefinition (155) ein Offset beinhaltet, und einen Krypto-Datenelement-Generator, der dazu dient, das Kryptoprodukt (160) basierend, mindestens teilweise, auf einem vom Offset angezeigten Anteil der Teilseed zu erzeugen.

7. Gerät nach irgendeinem der Ansprüche 1-6 und worin das Kryptoprodukt (160) eine aus einer Nachschlagetabelle; einer Matrix; und einer Permutationstabelle umfasst.

8. Server (100) umfassend:
einen Seed-Generator, der dazu dient, eine Seed (125) zu generieren;
einen Teilseed-Generator (140s) umfassend eine kryptographische Hash-Funktion zum Empfangen:
einer Teilnummer; und
der Seed (125) aus einem Seed-Empfänger und zum Erzeugen einer Teilseed, als Ergebnis der kryptographischen Hash-Funktion, wobei die Teilseed, mindestens teilweise, auf der Seed (125) und der Teilnummer basiert;
einen Teilgenerator (150s) umfassend einen Pseudo-Zufallszahlengenerator (155s), der dazu dient, die vom Teilseed-Generator (140s) erzeugte Teilseed zu empfangen, um ein Krypto-Datenelementteil mithilfe des Outputs des Pseudo-Zufallszahlengenerators (155s) zu erzeugen, wobei das Krypto-Datenelementteil, mindestens teilweise, auf einem Bitstream basiert;
einen Tester (130), der dazu dient, ein Kryptoprodukt (160) aus einer Mehrzahl empfangener Krypto-Datenelementteile zu generieren und das erzeugte Kryptoprodukt (160) zu testen und zu verifizieren, dass das erzeugte Kryptoprodukt (160) gewünschte kryptographische Eigenschaften hat, worin das erzeugte Kryptoprodukt (160) verwendet wird, um ein Lizenzverfahren betreffend den in einem konfigurierbaren Gerät (110) genutzten Inhalt zu implementieren; und
einen Sender, der dazu dient, als Reaktion auf ein positives Ergebnis des Verifizierens, die Seed an das konfigurierbare Gerät (110) zu senden.

9. Verfahren umfassend:
Empfangen einer Seed (125) aus einem Server (100);
Generieren einer Teilseed mithilfe eines Ergebnisses einer kryptographischen Hash-Funktion, wobei die Teilseed, mindestens teilweise, auf Folgendem basiert:
einer Teilnummer; und
der empfangenen Seed (125); und
Generieren eines Krypto-Datenelementteils (190) mithilfe des Outputs eines Pseudo-Zufallszahlengenerators (155c), wobei das Krypto-Datenelementteil, mindestens teilweise, auf der Teilseed basiert; und
Integrieren des generierten Krypto-Datenelementteils (190) in einen Blockcode, wodurch ein Kryptoprodukt erzeugt wird,
worin der Blockcode das generierte Kryptoprodukt als einen Hilfsinput in einen kryptographischen Algorithmus, der zum Schutz des digitalen Inhalts benutzt wird, benutzt.

10. Verfahren umfassend:
Generieren einer Seed (125);
Generieren einer Teilseed mithilfe eines Ergebnisses einer kryptographischen Hash-Funktion, wobei die Teilseed, mindestens teilweise, auf der Seed (125) und einer Teilnummer basiert; und
Generieren eines Krypto-Datenelementteils mithilfe des Outputs eines Pseudo-Zufallszahlengenerators (155s), wobei das Krypto-Datenelementteil, mindestens teilweise, auf der Teilseed basiert;
Generieren eines Kryptoprodukts (160) aus einer Mehrzahl empfangener Krypto-Datenelementteile; und
Testen des generierten Kryptoprodukts (160) und Verifizieren dessen, dass das generierte Kryptoprodukt gewünschte kryptographische Eigenschaften hat, worin das generierte Kryptoprodukt (160) benutzt wird, um ein Lizenzverfahren betreffend den in einem konfigurierbaren Gerät (140) genutzten Inhalt zu implementieren; und
Übertragen der Seed (125) an das konfigurierbare Gerät (110) als Reaktion auf ein positives Ergebnis des Verifizierens.

## Revendications

1. Un dispositif client configurable (110) permettant de consommer un contenu numérique, ledit dispositif (110) comprenant :
un chiffrement par bloc ;
un récepteur de germe servant à recevoir un germe (125) ;
un générateur de germe de partie (140c) comprenant une fonction de hachage cryptographique servant à recevoir :
un numéro de partie ; et
le germe (125) du récepteur de germe, et à générer un germe de partie, en tant que résultat de la fonction de hachage cryptographique, le germe de partie étant basé, au moins en partie, sur le germe (125) et sur le numéro de partie ;
un générateur de partie (150c) comprenant un générateur de nombres pseudo-aléatoires (155c) servant à recevoir le germe de partie produit par le générateur de germe de partie (140c) pour produire une partie d'élément de données cryptographiques en utilisant la sortie du générateur de nombres pseudo-aléatoires (155c), la partie d'élément de données cryptographiques étant basée, au moins en partie, sur le germe de partie ; et
un intégrateur de système cryptographique servant à intégrer la partie d'élément de données cryptographiques produite (190) dans le chiffrement par bloc, produisant ainsi un produit cryptographique
dans lequel le chiffrement par bloc sert à utiliser le produit cryptographique produit en tant qu'entrée auxiliaire dans un algorithme cryptographique utilisé pour protéger ledit contenu numérique.

2. Le dispositif selon la revendication 1 et dans lequel le numéro de partie comprend la valeur de compteur d'un compteur de série.

3. Le dispositif selon la revendication 1 ou la revendication 2 et dans lequel le générateur de partie (150c) sert à recevoir un type d'élément de données cryptographiques, et la partie d'élément de données cryptographiques produite est basée, au moins en partie, sur à la fois le germe de partie et le type d'élément de données cryptographiques.

4. Le dispositif selon l'une quelconque des revendications 1 - 3 et comprenant en outre le générateur de germe de partie (140c) pour recevoir une définition de configuration comprenant :
une définition du type d'élément de données cryptographiques ; et
des paramètres de génération d'élément de données cryptographiques.

5. Le dispositif selon l'une quelconque des revendications 1 - 4 et comprenant aussi :
l'intégrateur de système cryptographique servant en outre à recevoir le produit cryptographique (160) et à intégrer le produit cryptographique (160) dans un système cryptographique existant, produisant ainsi un nouveau système cryptographique.

6. Le dispositif selon la revendication 4 et dans lequel la définition de configuration (155) inclut un décalage, et un générateur d'élément de données cryptographiques servant à produire le produit cryptographique (160) basé, au moins en partie, sur une partie du germe de partie indiquée par le décalage.

7. Le dispositif selon l'une quelconque des revendications 1 - 6 et dans lequel le produit cryptographique (160) comprend soit une table de consultation ; soit une matrice ; soit une table de permutation.

8. Un serveur (100) comprenant :
un générateur de germe servant à générer un germe (125) ;
un générateur de germe de partie (140s) comprenant une fonction de hachage cryptographique, servant à recevoir :
un numéro de partie ; et
le germe (125) d'un récepteur de germe et à produire un germe de partie, en tant que résultat de la fonction de hachage cryptographique, le germe de partie étant basé, au moins en partie, sur le germe (125) et le numéro de partie ;
un générateur de partie (150s) comprenant un générateur de nombres pseudo-aléatoires (155s) servant à recevoir le germe de partie produit par le générateur germe de partie (140s) pour produire une partie d'élément de données cryptographiques en utilisant la sortie du générateur de nombres pseudo-aléatoires (155s), la partie d'élément de données cryptographiques étant basée, au moins en partie, sur un flux binaire ;
un testeur (130) servant à générer un produit cryptographique (160) d'une pluralité de parties d'élément de données cryptographiques reçues et à tester le produit cryptographique produit (160) et à vérifier que le produit cryptographique produit (160) a les propriétés cryptographiques souhaitées, dans lequel le produit cryptographique produit (160) est utilisé pour mettre en oeuvre un régime d'octroi de licence sur le contenu consommé à un dispositif configurable (110) ; et
un émetteur servant, en réponse à un résultat positif de la vérification, à envoyer le germe au dispositif configurable (110).

9. Un procédé consistant à :
recevoir un germe (125) d'un serveur (100) ;
générer un germe de partie en utilisant un résultat d'une fonction de hachage cryptographique, le germe de partie étant basé, au moins en partie, sur :
un numéro de partie ; et
le germe reçu (125) ; et
générer une partie d'élément de données cryptographiques (190) en utilisant la sortie d'un générateur de nombres pseudo-aléatoires (155c), la partie d'élément de données cryptographiques étant basé, au moins en partie, sur le germe de partie ; et
intégrer la partie d'élément de données cryptographiques générée (190) dans un chiffrement par bloc, produisant ainsi un produit cryptographique,
dans lequel le chiffrement par bloc utilise le produit cryptographique généré en tant qu'entrée auxiliaire dans un algorithme cryptographique utilisé pour protéger le contenu numérique.

10. Un procédé consistant à :
générer un germe (125) ;
générer un germe de partie en utilisant un résultat d'une fonction de hachage cryptographique, le germe de partie étant basé, au moins en partie, sur le germe (125) et un numéro de partie ; et
générer une partie d'élément de données cryptographiques en utilisant la sortie d'un générateur de nombres pseudo-aléatoires (155s), la partie d'élément de données cryptographiques étant basé, au moins en partie, sur le germe de partie ;
générer un produit cryptographique (160) d'une pluralité de parties d'éléments de données cryptographiques reçues ; et
tester le produit cryptographique généré (160) et vérifier que le produit cryptographique généré a les propriétés cryptographiques souhaitées, dans lequel le produit cryptographique généré (160) est utilisé pour mettre en oeuvre un régime d'octroi de licence sur le contenu consommé à un dispositif configurable (140) ; et
transmettre le germe (125) au dispositif configurable (110) en réponse à un résultat positif de la vérification.
